# EUROPEAN PATENT APPLICATION

(11) **EP 0 809 221 A2**
(43) Date of publication of application: **26.11.1997**
(21) Application number: 97107454.7
(22) Date of filing: 06.05.1997
(51) Int. Cl.: G07F 17/16, G07F 19/00, G06F 17/60

(54) **Virtual vending system and method for managing the distribution, licensing and rental of electronic data**

(30) Priority: 23.05.1996 US 652778
(71) Applicant: SUN MICROSYSTEMS, INC., Mountain View, CA 94043 (US)
(72) Inventor: Poggio, Andrew A., Palo Alto, CA 94306 (US); Hejza, Leo A., Sunnyvale, CA 94087 (US)
(74) Representative: Zangs, Rainer E., Dipl.-Ing.

(57) **Abstract**

A virtual vending machine manages a comprehensive vending service for the distribution of licensed electronic data (i.e., products) over a distributed computer system. The distributed computer system includes a group of client computers, a group of vendors that contribute the products to the virtual vending machine for distribution, and a server computer for operating the virtual vending machine. The virtual vending machine distributes licenses for the electronic data for the complete product or for components thereof and for a variety of time frames, including permanent licenses and rental period licenses. The virtual vending machine provides client computers with the capability to obtain information regarding the available products and the associated license fees and rental periods, to receive the product upon receipt of a corresponding electronic payment, and to reload the product during the term of the license. The virtual vending machine provides vendors with the capability of establishing a particular vending service that includes point-of-sale electronic payment and a means to communicate with the client computers to which licensed electronic data has been distributed.

## Description

The present invention relates to systems and methods for managing the distribution of licensed electronic data including the distribution of applications, application components, and computer readable data on either a permanent or time-limited rental basis.

### BACKGROUND OF THE INVENTION

The interconnection of various computer systems has provided a new medium for the distribution of computer software. Currently, networked computer systems are used to distribute computer software without any usage restrictions or a license fee. A number of "try and buy" systems also exist which enable users to try certain software programs in a limited time period without incurring a license fee. The "try and buy" systems typically limit the rights of the users of the trial versions by enclosing "time bombs" or "usage metering" schemes which limit the lifespan of the program to the trial period. The objective of the "try and buy" system is to allow the user to test the program before the user purchases it. Typically, the user can purchase the software at a retail store. Alternatively, the software can be downloaded to the user over the network and the user, in turn, mails the license fee to the vendor.

The success of these systems is due in part to the fast access that the network provides in acquiring the software. However, these systems are limited in the vending services that they provide. Specifically, the current systems do not provide any capability to acquire separate components of a software product or the capability to rent the software (or any machine transmitted information) or components thereof for a limited time period. Typically, a user acquires a license for a software product for the lifetime of the product. However, a user may have a need to use the product for a short time period with no need for it thereafter. For instance, a user may need to rent the latest version of a tax preparation software product each April. As the tax code changes annually, the user may prefer to rent the latest version of the software for one month prior to April 15th instead of purchasing the complete package each year.

Moreover, the current systems do not provide a capability for managing the redistribution (or reloading) of licensed computer software during the license period. This capability is essential for computer systems with limited or no secondary storage.

Therefore, the aim of the present invention is to account for the abovementioned limitations. Accordingly, it is a goal of the present invention to provide a virtual vending machine which fully utilizes electronic-network services in the procurement of electronic data on either a permanent or rental license basis.

It is a further goal of the present invention to provide a system and method as described above for the distribution of electronic data upon receipt of electronic payment of the associated license fee.

It is yet another goal of the present invention to provide a system and method as described above which provides a facility for reloading electronic data during the licensed period.

Another goal of the present invention is to provide a system and method which provides vendors of electronic data with a medium for distributing the electronic data to users interconnected by a communications link and to receive the appropriate license fees in an automated manner.

Other general and specific objects of this invention will be apparent and evident from the accompanying drawings and the following description.

### SUMMARY OF THE INVENTION

The present invention pertains to a virtual vending machine which manages a comprehensive electronic vending service for the distribution of licensed electronic data over a distributed computer system. The distributed computer system includes a group of client computers, a group of vendors, and at least one server computer which executes the virtual vending machine. The electronic data offered for procurement by the virtual vending machine includes any form of computer readable data that the vendor has the legal right to distribute. Further, the electronic data can be acquired as a complete product or as separate components thereof. There are also various license options available which can include procuring a license for a permanent time period or on a time-limited or rental basis.

The virtual vending machine provides the vendors with a mechanism to market, to distribute, to receive payment for the vendors electronic data, and to communicate with the users of the vendor's electronic data with minimal intervention by the vendor.

Users of the virtual vending machine are provided with a central repository of electronic data that can be procured in an expedient manner. The virtual vending machine provides the users with product information for the electronic data which details the operational requirements for the product as well as the associated license fees. The product information can be searched by the user using various keywords. Further, the electronic data can be electronically purchased by the user and repeatedly reloaded during the license period. Notifications or other announcements concerning the product are automatically forwarded to the user by the vendor.

The virtual vending machine can include several components which operate on a server computer. A vending information database is used to track the electronic data made available by the vendors and the sales transactions that occur. A Web server provides the users with Web pages (e.g., with product and pricing information) for each of the electronic data available for procurement. The electronic data is categorized by several search keywords for use by a search engine to retrieve a requested Web page. Vendors interact with a vending administration interface to establish a vending service for their particular electronic data. Point-of-sale electronic payment is facilitated by a digital cash interface which is connected to an electronic banking network. An electronic mail server is utilized to forward communications from the vendors to the users of the vendor's electronic data.

### BRIEF DESCRIPTION OF THE DRAWINGS

Additional objects and features of the invention will be more readily apparent from the following detailed description and appended claims when taken in conjunction with the drawings, in which:
Fig. 1 is a block diagram of an embodiment of a distributed computer system incorporating the present invention.
Fig. 2 is a block diagram of the virtual vending machine in a preferred embodiment of the invention.
Figs. 3A and 3B depict the vending information database used to store information about licensable products and sales information in a preferred embodiment of the invention.
Fig. 4 is a block diagram of the client computer in the distributed computer system of Fig. 1.
Fig. 5 is a schematic representation of an exemplary virtual vending machine Web page used to facilitate the distribution of the vendor products for licensing.
Fig. 6 is a schematic representation of an exemplary Web page used to obtain information on the procurement of a license for a vendor product.
Fig. 7 is a flow chart of an embodiment of the method for processing a request to license a vendor product in accordance with the present invention.
Fig. 8 is a schematic representation of an exemplary Web page used to obtain information on reloading a previously licensed product.
Fig. 9 is a flow chart of an embodiment of the method for processing a request to reload a previously licensed product in accordance with the present invention.
Fig. 10 is a flow chart of an embodiment of the method for processing service requests from the vendor in accordance with the present invention.

### DESCRIPTION OF THE PREFERRED EMBODIMENTS

For the purposes of this document, the term electronic data encompasses all forms of computer readable data, including but not limited to machine executable modules (e.g., applications, applications program, application components) and information content products (e.g., digitized video, voice data, chapter of books, and mailing lists). Further, the terms electronic data, vendor product, and product are used interchangeably.

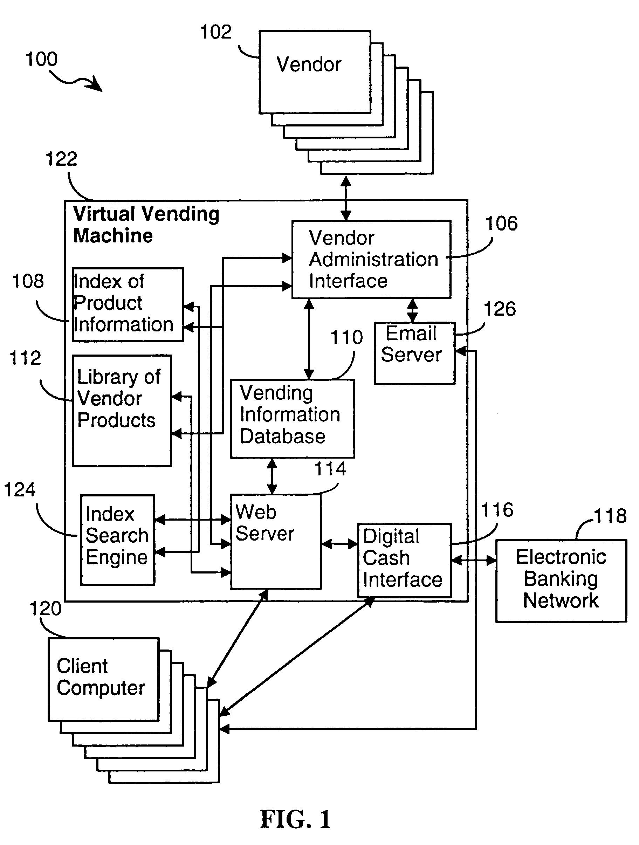

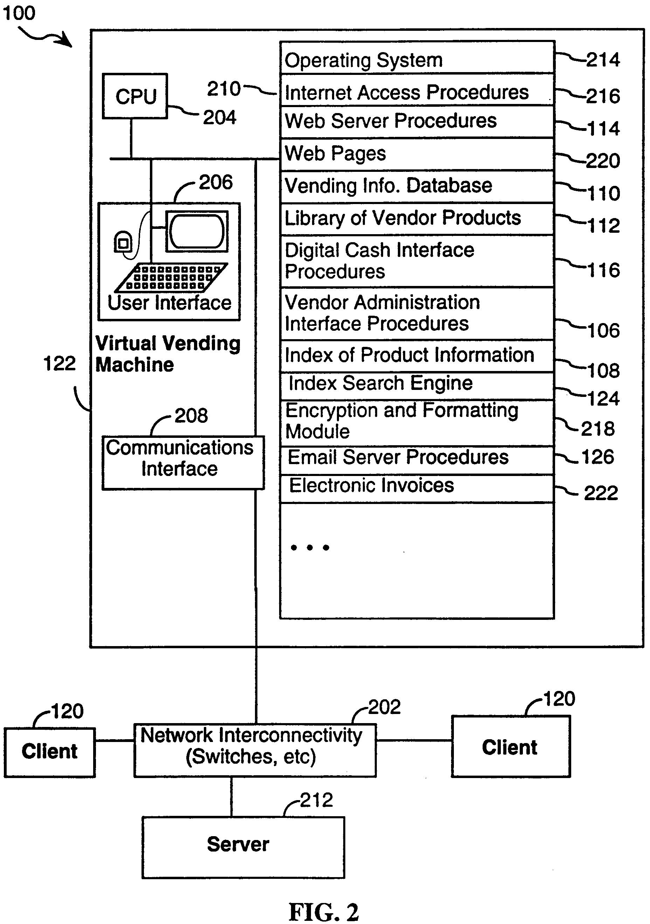

Figs. 1 and 2 illustrate the preferred embodiment of the computer system of the present invention. Referring to Figs. 1 and 2, there is shown a distributed computer system 100 having many client computers 120. Each client computer 120 can be connected to at least one server computer 212 through a network interconnectivity means 202, preferably the Internet. The present invention is not limited to the use of the Internet as other types of communication connections can be used. While most client computers 120 are desktop computers, such as Sun workstations, IBM compatible computers and Macintosh computers, virtually any type of computer can be a client computer. One or more users (not shown) can be associated with each client computer 120. It should be noted that the present invention is not limited to a distributed computer system. It may be practiced without the specific details and may be implemented in various computer systems and in various configurations, or makes or models of tightly-coupled processors or in various configurations of loosely-coupled microprocessor systems.

In the preferred embodiment, there can be at least one specially designated server computer referred to as the virtual vending machine 122. The virtual vending machine 122 can be used to manage the distribution of electronic data and components thereof on a variety of license terms between the client computers 120 and the vendors 102. Specifically, virtual vending machine 122 can be used to provide information on the various vendor products and components thereof that are available for distribution; provide information on the associated licensing fees and rental options; receive orders for a particular product; obtain electronic payment for a particular product; distribute the particular product to the client computer 120 initially and repeatedly within the licensed period; and provide the vendors 102 with a communications channel to the licensed users of their product.

The virtual vending machine 122 can include a central processing unit (CPU) 204, a memory 210 (i.e., fast random access memory as well as non-volatile memory, such as disk storage), a user interface 206, and a communications interface 208 for communication with the client computers 120 and the vendors 102 via the communications network 202.

Referring to Figs. 1 and 2, in the memory 210 of virtual vending machine 122, there can be stored the following components:
- an operating system 214;
- Internet access procedures 216;
- web server procedures 114;
- Web pages 220;
- a vending information database 110;
- a library of vendor products 112;
- digital cash interface procedures 116;
- vendor interface administration procedures 106;
- an index of the product information 108;
- an index search engine 124;
- an encryption and formatting module 218;
- electronic mail (email) server procedures 126; and
- electronic invoices 222.
A more detailed description of these components is provided below.

In the preferred embodiment, the virtual vending machine 122 can utilize a World Wide Web Server 114 (Web Server) to facilitate the management of the vending services. The Web Server 114 interacts with the client computers 120 utilizing standard World Wide Web (WWW) protocols. However, the present invention is not limited to this particular type of information server. Other information servers can be used, such as but not limited to, gopher servers, WAIS (Wide Area Information Servers) servers, other Internet database servers, or the like.

The Web Server 114 responds to requests from users for information and orders for a vendor product. The Web Server 114 interacts with other system components in the virtual vending machine 122 in order to process the user's request. The virtual vending machine 122 can include a vending information database 110, a library of vendor products 112, a vendor administration interface 106, an index search engine 124, and a digital cash interface 116. The vending information database 110 can contain product and sales information for each available vendor product. The library of vendor products 112 can be a repository for the available vendor products. The vendor administration interface 106 can interact with the vendors 102 in establishing a particular vending service for the vendor's products. The index search engine 124 can be used to perform searches on the available vendor products offered by the virtual vending machine 122. The digital cash interface 116 can provide the point-of-sale cash payment for the license fees associated with the vendor products. A more detailed description of each of these components will be presented below.

The distributed computer system 100 can be linked to numerous vendors 102 which provide the virtual vending machine 122 with products for distribution to the users associated with the client computers 120. The vendors can be any party in communication with the network 202 and who has the right to legally distribute the electronic data. Accordingly, the vendor can be a user associated with a client computer 120, a user associated with a server computer 212, online information service providers, or any other type of licensed distributor.

The vendors 102 interact with the virtual vending machine 122 through a vendor administration interface 106. The vendor administration interface 106 services requests from the vendors 102 which can include: requests to establish a vending service (i.e., make a vendor product available for distribution, license or rent, by the virtual vending machine); requests to update a vending service (i.e., update the vendor product and/or its documentation); requests to discontinue a vending service; and requests to communicate with the users of the vendor's product.

The distributed computer system 100 can further include a digital cash interface 116 for obtaining point-of-sale electronic payment for the license fee associated with a particular vendor product. The digital cash interface 116 is connected to an electronic banking network 118 which is a communications link to financial institutions such as banks, automatic clearing houses, and the like. Digital cash interface 116 interacts with the user and the virtual vending machine 122 in obtaining the pertinent payment information and forwards the transaction to the appropriate financial institution through the electronic banking network 118.

Digital cash interface 116 can be a digital cash server such as the CyberCash server. However, the present invention is not limited to this type of point-of-sale electronic payment scheme. Others can be used which provide an appropriate point-of-sale electronic payment method, which can include but is not limited to, such systems as First Virtual Holdings, DigiCash, Checkfree, and the like. Further, the present invention is not constrained to credit card payment transactions but can include all forms of electronic payment, including but not limited to, debit transactions, electronic funds transfer, and other types of cash transactions.

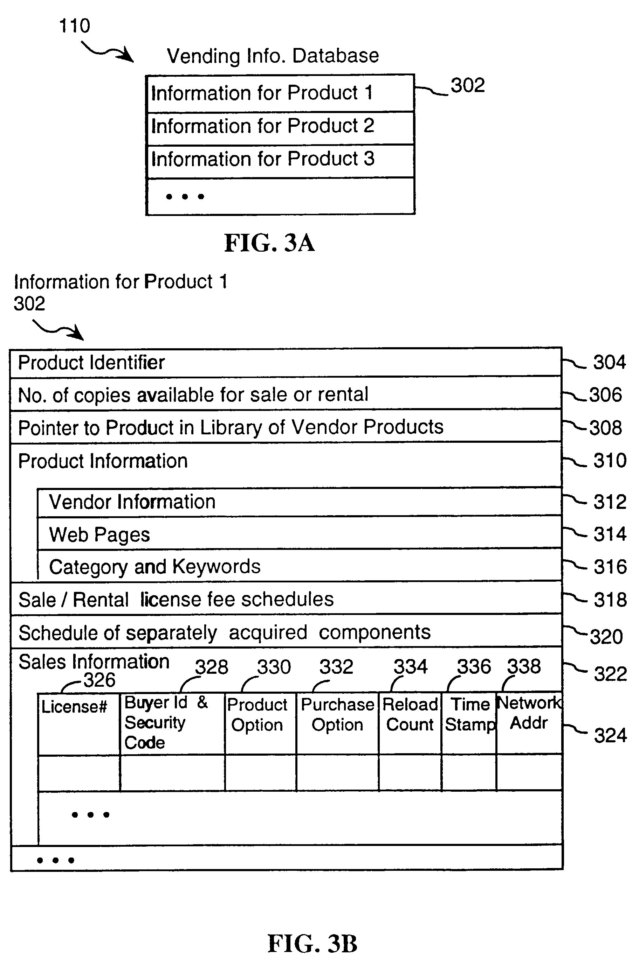

Figs. 3A and 3B depict the structure of the vending information database 110 in the preferred embodiment. The vending information database 110 maintains product information for each vendor product that is offered by the virtual vending machine 122 and tracks sales data for each product purchased. The vending information database 110 contains an entry 302 for each vendor product and can contain the following information:
- a product identifier 304, which can be any alphanumeric character string (such as the product name) that uniquely identifies the product;
- the number of copies of the vendor product available for sale or rental 306 (i.e., the number of licenses authorized by the product's vendor, minus the number of licenses granted so far);
- a pointer to the location of the vendor product in the library of vendor products 308;
- product information 310 which can include the following information:
   * vendor information 312, which contains data on the particular vendor which supplied the vendor product, preferably the vendor's name and network address;
   * Web pages 314, which provide information on the product including but not limited to a general description, the version number, hardware and software requirements and restrictions, and the like; and
   * category and keywords 316, which denote classifications that are used in referencing and searching the vendor products available in the virtual vending machine 122;
- sale and/or rental license fee schedules 318, which indicate the licensing fees for the vendor product and the separately-acquired components on a purchasable and/or rental basis;
- a schedule of components 320 that are part of the vendor product and can be purchased or rented independently;
- sales information 322, which can include an entry for each license of the vendor product 302 purchased through the virtual vending machine 122, where each entry 324 can include the following:
   * license number 326;
   * buyer identifier and security code 328, which uniquely represents the buyer;
   * product option 330, which indicates the particular product and/or component acquired;
   * purchase option 332, which indicates whether the particular product and/or component was purchased or rented;
   * reload count 334, which is a count of the number of times the product has been redistributed to the user within the rental or license period;
   * time stamp 336; and
   * network address 338, which indicates the network address of the buyer.

Referring to Figs. 2 and 3, there is an indexing structure known as the index of product information 108 which is associated with the Web pages for each vendor product. The index 108 is used to provide quick access to reference or search information on the various vendor products available for license by the virtual vending machine 122. As vendor products and their associated Web pages are inserted and deleted into the vending information database 110, the index structure 108 is updated to reflect the change. The indexing structure 108 is used by the index search engine 126 in response to requests by the user and will be described in more detail below.

It should be noted that the present invention is not constrained to this particular design or format of the vending information database 110 and the index 108. Alternate database formats and indexing structures can be utilized so long as they provide similar functionality.

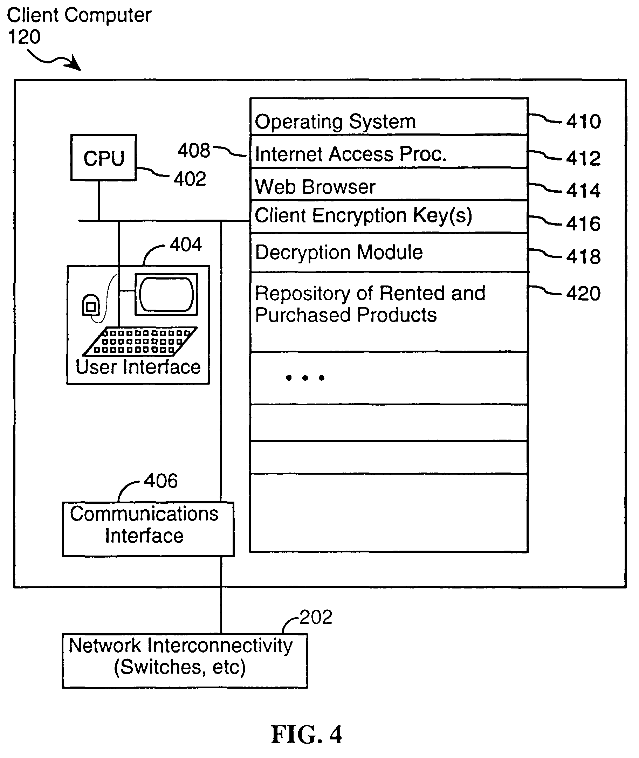

Referring to Fig. 4, there is shown a block diagram of the client computer 120 in the distributed computer system 100. The client computer 120 can include a central processing unit (CPU) 402, a user interface 404, a memory 408, and a communications interface 406 for communication with the virtual vending machine 122 via the communications network 202. The memory 408 of the client computer 120 can be used to store the following:
- operating system 410;
- Internet access procedures 412;
- web browser 414;
- client encryption keys 416;
- decryption module 418 for decoding encrypted electronic data received from the virtual vending machine; and
- a repository of rented and purchased vendor products 420.

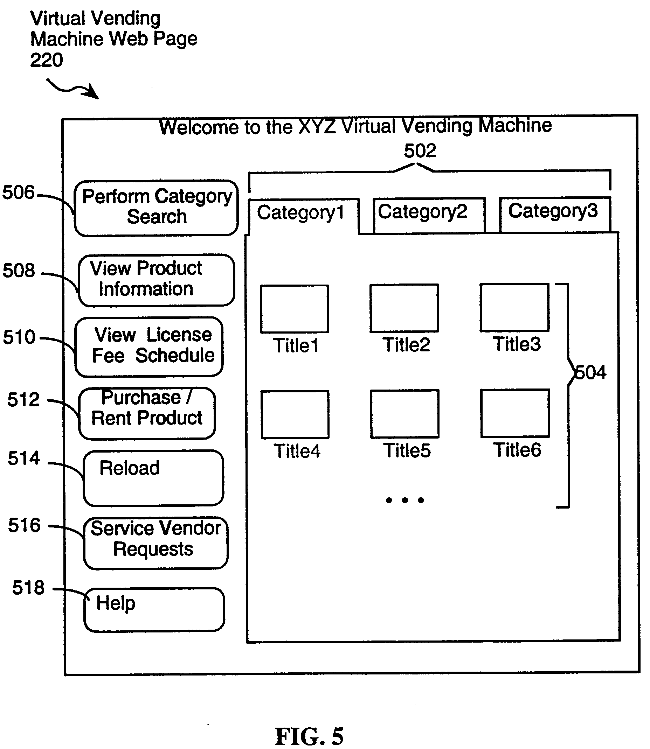

Referring to Fig. 5 there is shown a schematic representation of an exemplary virtual vending machine home Web page 220 of the Web server 114, accessible by a user using client computer 120. The Web page 220 includes menu selection buttons for: searching the various categories of vendor products 506; viewing information about the available vendor products 508; viewing the licensing fee schedules for the vendor products 510; initiating the purchase of a license for a vendor product on a permanent or limited time period basis 512; requesting the reloading of a previously acquired vending product 514; requesting access to various vendor services 516; and obtaining help on the virtual vending machine 518.

The vendor products can be classified into categories 502. The categories 502 can be classified by product types (e.g., compilers, Java applications, Web browsers, screen savers, digitized music scores, video data, device drivers, or non-software categories such as books, still photos, phone directories, music, movies, etc.), by vendors (e.g., Microsoft, Sun, IBM, etc), or any other classification scheme. Associated with each category can be menu buttons displaying the particular category 502. For each category, there can be a corresponding selection button for the title of each vendor product within the category 504. It should be noted that the present invention is not limited to the particular design depicted in the exemplary Web page. Others can be used which provide similar functionality.

If the user wants to perform a search of the various vendor products or categories that are available, the user selects the perform category search menu button 506. A search Web page (not shown) will be downloaded to the user which will guide the user on the available search capabilities and search keywords. The index search engine 126 will receive the user's search criteria and perform the search utilizing the index of the product information 108.

If the user wants to access information describing a particular product, the user selects the button 504 corresponding to the title of the product and the view product information menu button 508. A first Web page (not shown) associated with the selected product is then downloaded to the user. Subsequent Web pages of product document are accessed by the user using standard hypertext linking provided by the client computer's Web browser and hypertext links in the product documentation.

Similarly, if the user chooses to access the license fee schedule for a particular product, the user selects the button 504 corresponding to the title of the product and the menu button 510 for viewing the license fee schedule. Another Web page (not shown) is then transmitted to the user which contains the license fee schedule for the particular product.

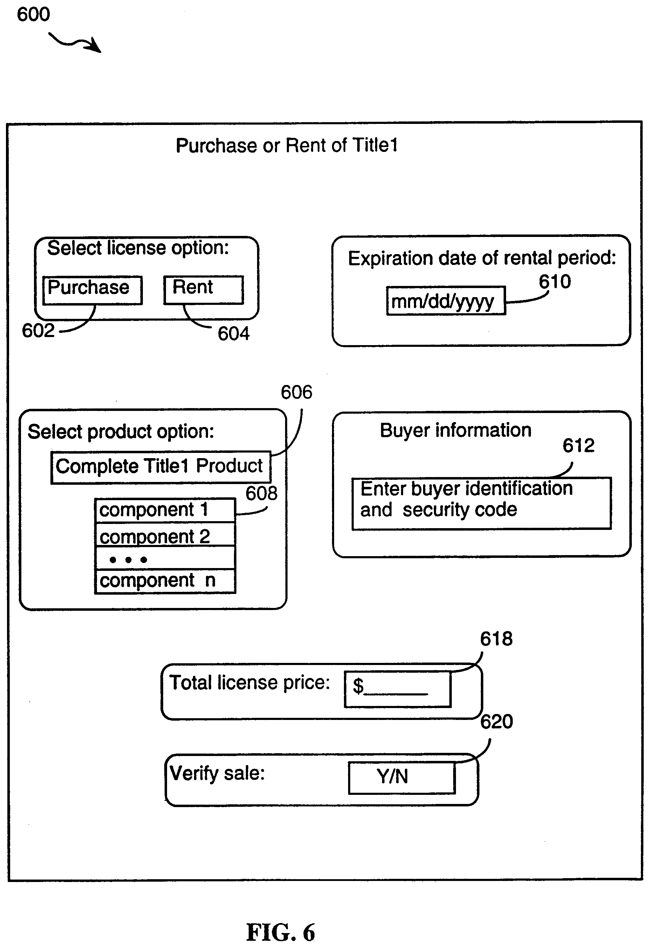

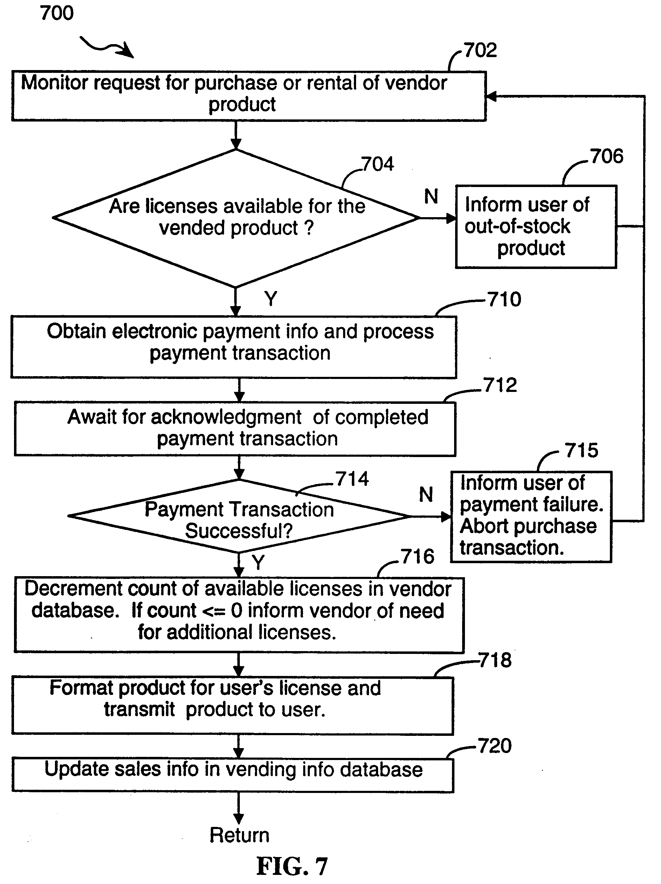

Fig. 6 is an exemplary Web page 600 for the purchase or rent of a selected product. The Web page 600 can be accessed by selecting the button for the title of the vendor product 504 and the purchase / rent product menu button 512. Fig. 7 is a flow chart depicting the method 700 executed by the web server 114 in response to a user's order initiated through Web page 600. Referring to Figs. 6 and 7, the Web page 600 can contain menu buttons which select the product and license options that the user prefers. By selecting menu button 602 the user selects the license option (i.e., to purchase a permanent license to the specified product) and by selecting menu button 604 the user selects the rent option. For the purposes of this document, the license purchase option indicates that a license for the product is acquired in perpetuity. The rent option indicates that a license for the product is acquired for a limited time period.

Web page 600 can also contain menu buttons for indicating the following:
- whether the entire product 606 is being licensed, or just specified components thereof 608;
- the expiration date of the rental period 610, if the rental option 604 is selected;
- a buyer identification and security code 612;
- the total license fee 618; and
- an explicit verification of the sale by the user 620.

The user selects the appropriate menu buttons and enters the appropriate information in the displayed fields which is received by the web server 114 (step 702). The method proceeds to verify that a license is available for the desired license option by checking the number of available licenses 306 in the vending information database 110 (step 704). If no licenses are available (i.e., the stock of authorized licenses has been depleted), the method informs the user that the virtual vending machine is temporarily out-of-stock of licenses for the particular product (step 706).

Otherwise (step 704-Y) the method proceeds to collect a form of electronic payment for the license fee (step 710). Preferably, the web server 114 forwards an invoice 222 to the user associated with a client computer 120. The user adds a credit card number (or other form of payment authorization) to the invoice, which is then encrypted and forwarded back to the web server 114. The web server 114 attaches a confirmation number to the invoice and the entire invoice is encrypted and transmitted to the digital cash interface 116. The digital cash interface 116 reformats the invoice into the appropriate format for transmittal to the electronic banking network 118 which processes the transaction.

The digital cash interface 116 awaits for an indication from the electronic banking network 118 signifying successful completion of the payment transaction (i.e., credit card or electronic funds transfer transaction). This indication is forwarded to the web server (step 712). If the payment transaction fails (714-N), the user is so informed and the purchase transaction is aborted (715). If the payment transaction was successful (714-Y), the method decrements the count of the available licenses 306 in the vending information database 110 (step 716). If the remaining number of available licenses 306 is zero (or less than zero), the method informs the vendor that additional licenses are needed (step 716).

The method then proceeds to format the purchased product for transmission to the user (step 718). Preferably, rental products are formatted to include a time bomb or other disabling device which will disable the product at the end of the rental period. In addition, the formatted product is encrypted before it is transmitted to the user utilizing the encryption and formatting module 218. The product can be encrypted utilizing any of the well-known encryption techniques, such as but not limited to DES, RSA, and the like. More generally, the product is encrypted so that it can be decoded only by the user or client who paid for the product. Lastly, the sale is recorded in the sales information entry 322 of the vending information database 110 (step 720).

The user's system decodes the received electronic data product using its decryption module 418 and stores the licensed electronic data in its repository 420.

In alternate embodiments, the payment transaction could be handled in other ways, depending on the electronic payment methods that are commercially available. For instance, the virtual vending machine could request that the requesting user pay it a specified amount of funds, after which the user would perform a separate transaction, using an appropriate electronic banking network or service provider, to pay the specified funds to the virtual vending machine. The virtual vending machine, upon receipt of confirmation from the electronic banking network or service provider that the payment had been made, would then transmit the electronic data to the client computer.

Referring back to Fig. 5, another vending service offered to the user is that of reloading. Reloading is the retransmission of a previously purchased product within the licensed or rental period. This option is highly desirable to users associated with client computers 120 that have minimal or no secondary storage (i.e., non-volatile storage such as disk storage). The main memory of the user's computer may not provide a suitable alternative to store the licensed product. The reloading option is chosen by selecting the buttons for the appropriate title for the product 504 and the reload menu button 514.

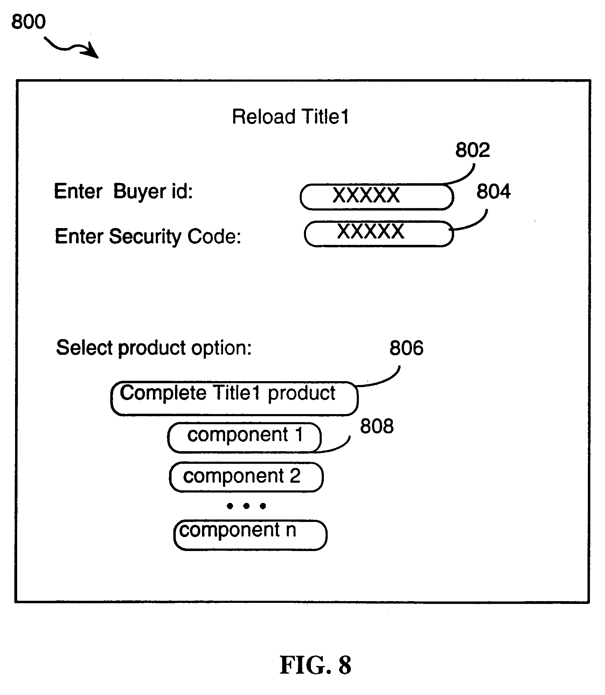

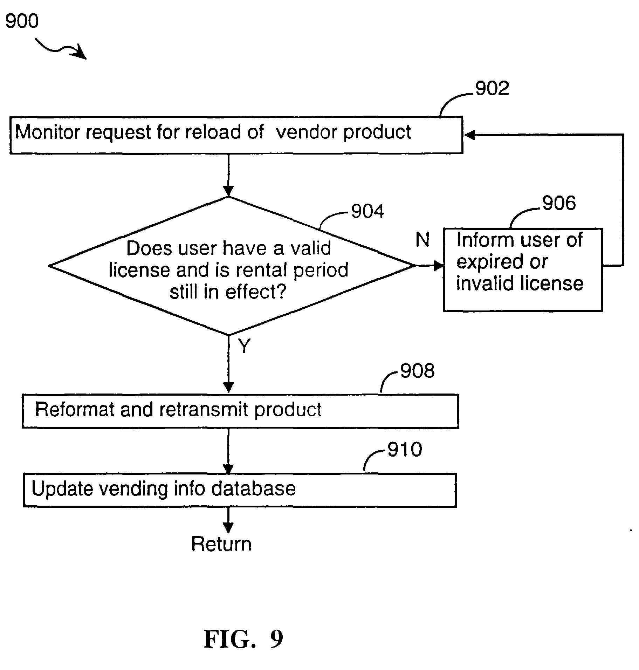

Fig. 8 depicts an exemplary Web page 800 which illustrates the required information for requesting a reload of a vendor product and Fig. 9 illustrates the method 900 for performing the reload function. Referring to Figs. 8 and 9, a user enters his/her buyer identification 802 and security code 804 and indicates the desired product 806 and/or component(s) to be reloaded 808. The Web server 114 receives this information (step 902) and proceeds to check whether the user has a current license for the specified product. This check can be made by searching the sales information 322 stored in the vending information database 110 (step 904). If the check indicates that there is no current license for the requested reloaded product by the user, the process informs this to the vendor (step 906).

Otherwise, the product is formatted for transmission to the user and then transmitted (step 908) as previously described in reference to Fig. 7, and the reload count 334 in the vending information database 110 is updated to reflect this additional retransmission (step 910). The number of reloads for a particular user and product is tracked in the event the vendor requests such information.

Referring once again to Fig. 5, another function provided by the virtual vending machine 122 is to service vendor requests, which is invoked by the selection of menu button 516. These requests can be for the establishment of a vending service, to discontinue a vending service for a product, to update a product or its documentation, to authorize additional licenses, or to channel a communication to the users of a product through electronic mail. For the purposes of this application is it assumed that the vendor has the right to legally distribute the product. When a vendor selects this service, the web server 114 transmits to the vendor a Web page (not shown) which informs the vendor of the various vendor services that are provided and the appropriate information that is required to perform the service. The vendor, in turn, transmits to the Web server 114 the required information and the vendor administration interface 106 services the request.

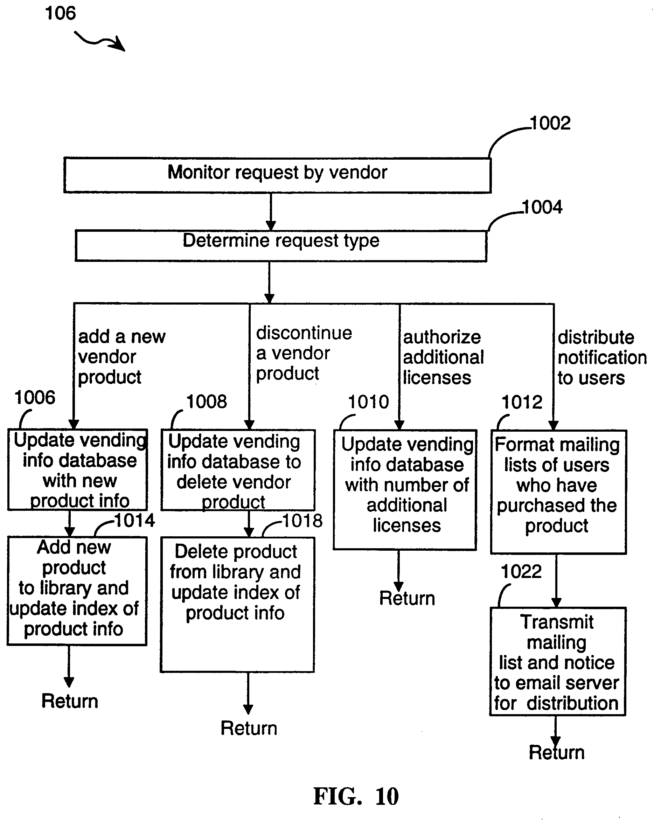

Fig. 10 is a flow chart illustrating some of the steps the vendor administration interface 106 can take in servicing the vendor's requests. Preferably, the vendor administration interface 106 is a server process that monitors requests from the vendors (step 1002). Upon receipt of a request, the vendor administration interface 106 proceeds according to the type of request (step 1004). For a request to establish a vending service (i.e., add a vendor product to the virtual vending machine), the vendor administration interface 106 can receive from the vendor the following information:
- product identifier;
- the number of copies for sale and for rent;
- the vendor products and separately-acquried components thereof;
- vendor information such as vendor id and network address;
- category and search terms for each of the vendor products;
- Web pages describing the product; and
- sale and rental license fees.

The vendor administration interface 106 prepares an entry for this product in the vendor information database 110 based on the information received (step 1006). The product and components thereof are inserted into the library of vendor products 112 and the index of the product information 108 is updated accordingly (step 1014).

For a request to discontinue a vendor product, the vendor administration interface 106 can receive from the vendor the product and vendor identifier. The vendor administration interface 106 deletes the products and components thereof from the library of vendor products 112 and from the index of product information 108 (step 1008), deletes the entry for this product in the vendor information database 110, and updates the index of product information accordingly (step 1018).

If a vendor's request is to authorize the addition of more licenses, the vendor administration interface 106 updates the vending information database 110 for the product with the additional number of licenses 306 (step 1010).

Furthermore, the vendor can communicate with the users of the product through the virtual vending machine's email server. For example, a vendor can request the distribution of a notification to all or some of the licensed users of a product (e.g., to distribute an announcement for an update or new version of the vendor product). In this case, the vendor administration interface 106 receives the notice and the notification criteria and formats a mailing list of the licensed users (step 1012). The mailing list and the notice is forwarded to the email server 126 which formats the message and distributes it to the appropriate users (step 1022).

The vendor administration interface 106 and digital cash interface 116 can be used to periodically send sales information and associated payments to the product vendors.

The above mentioned system and method describes a virtual vending machine which provides a comprehensive vending service for the distribution of any form of electronic data (i.e., vendor product) over a network of interconnected computer systems. The virtual vending machine is beneficial since it provides fast access to the latest version of electronic data. It also provides the ability to acquire components of a vendor product and to acquire the product or components thereof on a rental basis. From the vendor's perspective, the virtual vending machine is advantageous since it provides a means to market the product, a means to communicate with the licensed users, and a means to receive payment with minimal intervention by the vendor. From the users perspective, the virtual vending machine is advantageous in providing a central repository for obtaining the latest version of a product and to acquire the associated license for a preferred duration. The reloading capability is distinctly useful since it provides the users with the capability of accessing the product as often as needed during the license period.

While the present invention has been described with reference to a few specific embodiments, the description is illustrative of the invention and is not to be construed as limiting the invention. Various modifications may occur to those skilled in the art without departing from the true spirit and scope of the invention as defined by the appended claims.

Further, the method and system described hereinabove is amenable for execution on various types of executable mediums other than a memory device such as a random access memory. Other types of executable mediums can be used, such as but not limited to, a computer readable storage medium which can be any memory device, compact disc, or floppy disk.

## Claims

1. A method for managing a virtual vending machine for procuring electronic data over a distributed computer system for a plurality of rental periods, the distributed computer system comprising of a plurality of vendors, a plurality of clients, and at least one server interconnected by a communications link, said method comprising the steps of:
obtaining the electronic data from the vendors for distribution by the virtual vending machine to the clients;
receiving a request from one of the client to acquire one of the electronic data for rental during one of the rental periods;
procuring electronic payment for the electronic data from the client; and
upon successful receipt of the electronic payment, transmitting the electronic data to the client via the communications link.

2. The method of claim 1,
receiving a request from the client to retransmit the electronic data;
upon verifying that the rental period associated with the requested electronic data has not expired, retransmitting the requested electronic data to the client without obtaining additional electronic payment.

3. The method of claim 1,
said electronic data transmission step including modifying the electronic data so as to automatically disable use of the electronic data upon expiration of the rental period, and encrypting the modified electronic data prior to transmission thereof to the one client so as to disable use of the electronic data by clients other than said one client.

4. The method of claim 1,
receiving a communication from one of the vendors for distribution to a set of clients that have acquired the electronic data; and
transmitting the communication to the set of clients.

5. The method of claim 1,
wherein the electronic data comprises information content products and machine executable modules.

6. The method of claim 1,
prior to said receiving step, providing the one client with rental pricing information.

7. A method for distributing products over a network of computer systems, said network comprising a virtual vending machine for distributing the products, and a plurality of users for acquiring the products, said method comprising the steps of:
transmitting the products to the virtual vending machine from vendors connected to the network;
transmitting a request to the virtual vending machine from one of the users to rent one of the products during one of a plurality of rental periods;
procuring electronic payment for the rental of the product; and
transmitting the product to the user upon completion of the electronic payment.

8. The method of claim 7,
upon request by the user, retransmitting the product to the user within the rental period.

9. The method of claim 7,
said product transmission step including modifying the product so as to automatically disable use of the product upon expiration of the one rental period, and encrypting the modified product prior to transmission thereof to the one user so as to disable use of the product by users other than said one user.

10. The method of claim 7,
transmitting communications from one of the vendors to a set of the users that have received the vendor's product.

11. The method of claim 7,
prior to said step of transmitting a request to the virtual vending machine from the one user, transmitting rental pricing information to the one user.

12. The method of claim 7,
wherein the products comprise information content products and machine executable modules.

13. A virtual vending machine for managing the procurement of licenses for vendor products on a distributed computer network, said distributed computer network comprising a plurality of client computers in communication with the virtual vending machine and a plurality of vendors contributing the vendor products for distribution by the virtual vending machine, said virtual vending machine comprising:
a memory device for storing the vendor products, a subset of the vendor products each comprising a complete product having components available for individual licensing, wherein a subset of said vendor products and components are available for licensing by users associated with the client computers on a permanent basis and on a limited time period rental basis;
a processor for executing a server process, the server process for managing the procurement of licenses for the vendor products and components; and
a communications link to an electronic funds provider and to the client computers for acquiring payment for the licenses and for transmitting the licensed vendor products and components to the client computers upon receipt of the payment.

14. The virtual vending machine of claim 13,
wherein the server process stores and provides access to product information for the vendor products available for procurement by the virtual vending machine.

15. The virtual vending machine of claim 13,
wherein the server process stores and provides access to licensing fee information for the vendor products available for procurement by the virtual vending machine.

16. The virtual vending machine of claim 13, including:
an electronic mail server, executable by said processor, for providing communications between a specified vendor and selected client computers that have previously acquired licenses for a vendor product associated with the specified vendor.

17. The virtual vending machine of claim 13,
a vendor administration interface, executable by said processor, for managing requests by the vendors for service by the virtual vending machine in the distribution of the vendor's vendor products.

18. The virtual vending machine of claim 13, including:
formatting and encryption instructions, executed by said processor, for modifying the vendor products so as to automatically disable use of the vendor products upon expiration of specified rental periods, and encrypting the modified vendor products data prior to transmission thereof to respective ones of the client computers so as to disable use of the electronic data by other ones of the client computers.

19. A computer readable storage medium configured to direct the operation of a server computer to manager the distribution of electronic data in a distributed computer system, the distributed computer system comprising of a plurality of client computers having users associated therewith and at least said one server computer, said computer readable storage medium comprising:
a server for managing the distribution of electronic data to the client computers, said server providing the client computers with product information on the electronic data, for procuring orders for the electronic data, and for transmitting the electronic data to the client computers;
a library for storing the electronic data;
a vending information database for storing the product information on the electronic data available for distribution over the distributed computer system, said electronic data available for distribution for a plurality of license fees, each license fee having an associated time period for which use of the electronic data is authorized;
a vendor administration interface for acquiring the electronic data from a plurality of vendors connected to the distributed computer system; and
a digital cash interface, coupled to the server and an electronic banking network, for obtaining point-of-sale electronic payment of the license fee associated with licensing use of the electronic data for a specified time period.

20. The computer readable storage medium of claim 19, including:
an index of the product information stored in the vending information database; and
an index search engine, utilizing said index of the product information, for allowing users to search the electronic data using various keywords.

21. The computer readable storage medium of claim 16,
an electronic mail server for providing electronic communication between the vendors and the client computers.
